(19) Europäisches Patentamt
European Patent Office
Office européen des brevets

(11) **EP 3 696 722 A1**

(12) **EUROPEAN PATENT APPLICATION**

(43) Date of publication:
**19.08.2020 Bulletin 2020/34**

(51) Int Cl.:
***G06K 9/00*** *(2006.01)*  ***G06K 9/20*** *(2006.01)*

(21) Application number: **19465509.8**

(22) Date of filing: **14.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Continental Automotive GmbH**
**30165 Hannover (DE)**
• **Continental Automotive Romania SRL**
**300704 Timisoara (RO)**

(72) Inventors:
• **Stoichina, Ovidiu-Stefan**
**300704 Timisoara (RO)**
• **Botusescu, Adrian**
**300704 Timisoara (RO)**
• **Krökel, Dieter**
**90411 Nürnberg (DE)**

(74) Representative: **Schlögl, Michael Jens Uwe**
**Continental Automotive Romania SRL**
**Siemens Street 1**
**300704 Timisoara (RO)**

Remarks:
Amended claims in accordance with Rule 137(2) EPC.

(54) **METHOD OF REMOVING STRAY LIGHT FROM A VEHICLE WINDOW IN A CAMERA ARRANGEMENT, CAMERA ARRANGEMENT FOR USING SAID METHOD AND COMPUTER PROGRAMS**

(57)    The invention relates to a method of removing stray light from a vehicle window, camera arrangement for using such method and computer programs . According to invention, the method of removing stray light from a vehicle window (W) in a camera arrangement (1) comprises an exterior-facing camera (10) configured to provide images to an advanced driving assistance system ADAS processing chain (2), said camera (10) with a field of view of less than or equal to 130° measured in horizontal plane, being mounted in the interior of the vehicle and facing said window (W), using a polarization filter (102) placed in the optical path of the camera (10) wherein said polarization filter (102) is electronically switchable allowing changing its state from ON to OFF and from OFF to ON, being operated by means of a micro-controller (103) and wherein the following repetitive sequence of steps is carried out: Step 1: Switching the polarization filter (102) ON, acquiring a reference image and temporary storing said reference image in at least one memory component (106); Step 2: Switching the polarization filter (102) OFF, acquiring at least one subsequent image and temporary storing said reference image in the at least one memory component (106); Step 3: Comparing the intensity of each pixel of the reference image with the intensity of each pixel of at least one subsequent image acquired with the polarization filter (102) switched OFF;

Step 4 : Identifying stray light to be removed; Step 5: Removing identified stray light from the at least one subsequent image, resulting a corresponding at least one corrected image; Step 6: Temporary storing the at least one corrected image in the at least one memory component (106) wherefrom said corrected image can be used by the advanced driving assistance system ADAS processing chain (2).

Fig. 4a)

EP 3 696 722 A1

**Description**

Field of the invention

The invention is related to cameras used in advanced driver assistance systems processing chain, particularly in the field of removing window reflections on the images acquired by such camera mounted in the interior of a vehicle.

Background of the invention

Advanced driver assistance systems (ADAS) cameras, hereafter alternatively called cameras, are more and more used in automotive industry for the purpose to provide the advanced driver assistance systems processing chain with quick and accurate detection and recognize of objects and persons from the exterior of the vehicle such as other vehicles, pedestrians, obstacles, traffic signs, and lane lines, etc. The information captured by cameras is then analysed by ADAS processing chain and used to trigger a response by the vehicle, being used for a wide range of functions, including for example: autonomous emergency braking (AEB), lane departure warning (LDW), lane keep assist, blind spot detection, night vision cameras and adaptive lighting, traffic sign recognition, parking assistance, etc.

ADAS cameras are of various types, including for example: mono-cameras, stereo cameras, or surround cameras.

Many ADAS cameras are windscreen-mounted facing forward. However, ADAS camera may be mounted facing other windows of the vehicle in order to provide information from other zones of the exterior of said vehicle.

In order to comply with the requirements of advanced driver assistance systems, the ADAS camera must have a field of view as clear as possible, ideally showing only exterior images.

In reality, the images provided by the ADAS camera show not only the exterior of the vehicle, namely objects and persons for the detection of which ADAS camera was mounted, but also some amount of stray light.

Stray light is used throughout this invention with the meaning of a light in an optical system, in this case the ADAS camera, which was not intended when said optical system was designed.

In this invention, stray light takes the shape of reflections that appear on the window of the vehicle from various sources. In some case, reflections originate from the dashboard or objects placed on it, other reflections originate from the interior of the vehicle or from the accumulated dust. For this reason, throughout this invention the terms stray light and reflection shall be used interchangeably.

Other terms that shall be used interchangeably in this invention are: picture(s), shot(s), image(s), having the same meaning of picture(s) acquired by the ADAS camera.

Stray light impedes the ADAS camera to fulfil the role for which it is designed, namely to take optimum quality pictures in order to assist driving for the purpose of improving safety. This happens because the image provided by ADAS camera contains, apart from the screenshot of the exterior environment, a certain quantity of reflections, the quantity depending on various factors such as: intensity of outside light, materials and colours of the objects of the interior, dust, etc.

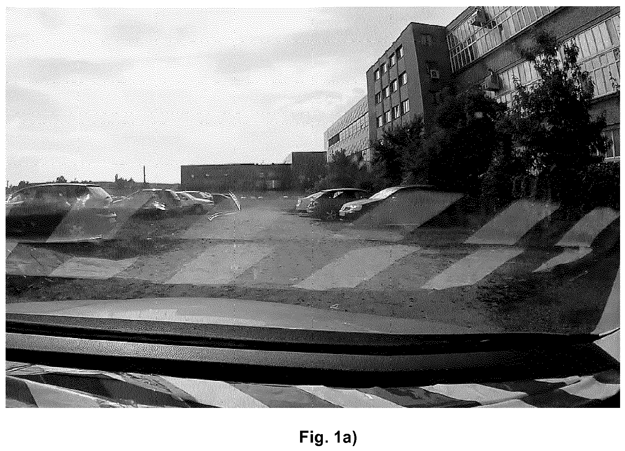

Fig. 1a) shows the image seen through a windscreen where stray light is present in the lower part originated from a ribbon intentionally placed on the dashboard D, to better put in evidence the reflection.

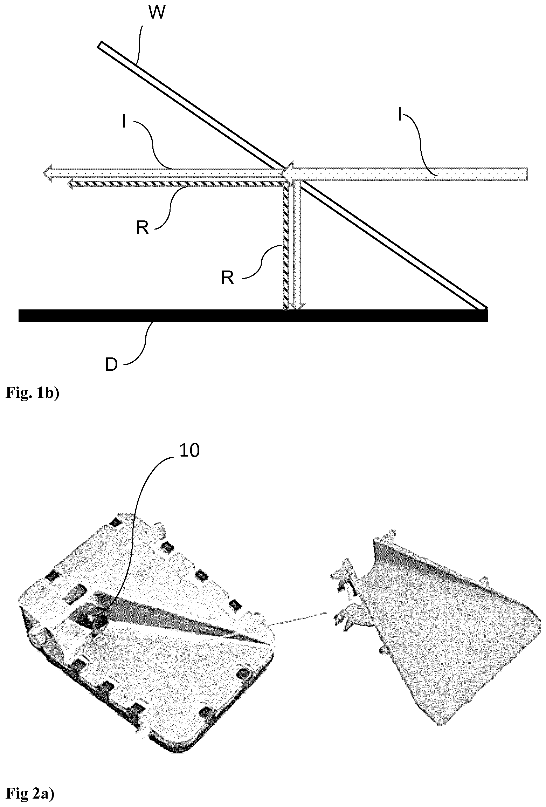

Fig 1b) shows the scheme of incident light I and reflected light R present on the windscreen. Reflection on the windscreen is the most frequently encountered type of stray light.

The stray light may lead to the possibility of creating ghost objects in the image acquired by the camera. Disturbing the field of view or the quality of the pictures of ADAS camera may result in inaccurate assessment of the road context putting vehicles' and people's safety at risk, because decision of the driver- human or automated, is taken by using the information provided by various ADAS cameras of the vehicle.

For this reason, stray light covers are being widely used in order to remove the stray light.

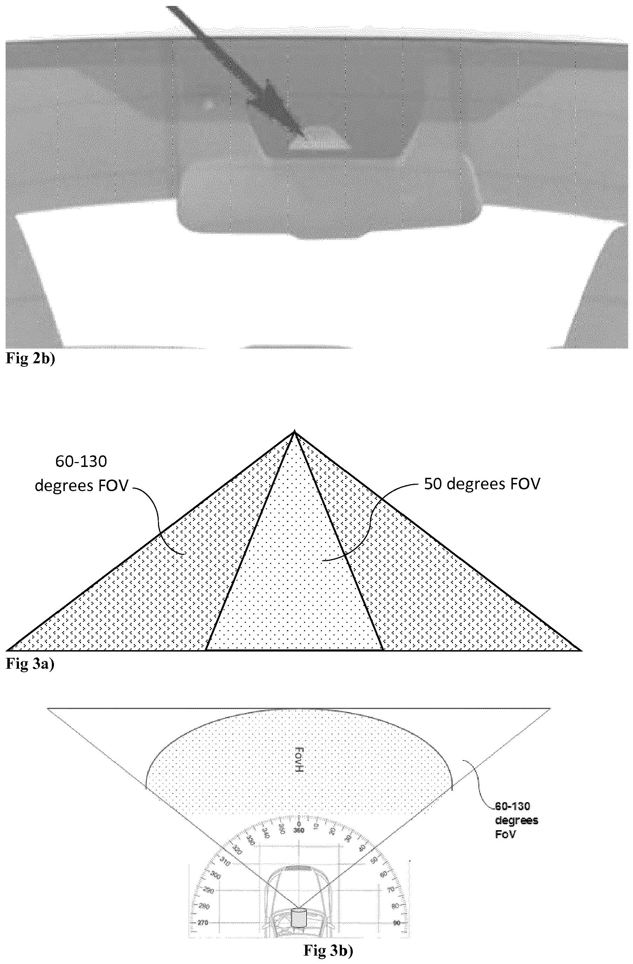

An example of stray light cover for the ADAS camera mounted in the proximity of the interior mirror, facing the windscreen is shown in Fig. 2a) and an illustrative picture of the arrangement of the camera facing the windscreen is shown in Fig. 2b). Stray light covers are quite efficient in removing stray light, they manage to remove most of the reflections and they are of simple design that allows to customize different windscreen setups.

Another method of removing stray light is by using a polarization filter.

For example, US 2017/0227791 discloses smart sunglasses, smart window and smart mirror for augmenting human vision by means of adaptive polarization filter grids. US 2017/0227791is based on the fact that removing stray light-called glare in this patent, is carried out by making use of a grid of electrically configurable filters, said filters being in connection with a polarization sensor for capturing polarization characteristics of incident light and in connection with a polarization analyser for analysing polarization characteristics of incidental light and determining a target polarization filter state, said polarization filter state referring to angles of the grid element, such as disclosed in an embodiment 0°, 45°, 90° and 135°.

Smart window disclosed in US 2017/0227791 makes use of the polarization filter states mainly with the purpose of adapting the elimination of the glare to the line of sight of each individual driver.

Other example of using a polarization filter is presented in DE 102017202155, that discloses a camera system and a method of eliminating stray light. The method is based in using a camera or two cameras placed in a vehicle behind the windscreen, said camera(s) being provided with image evaluation unit.

The camera(s) take(s) several outer shots of an external environment of the vehicle and compare the shots by means of the image evaluation unit.

The shots comprise static image components that correspond to the unwanted reflections, said static image components being recognized and extracted from the external shots by means of the image evaluation unit carrying image processing techniques.

Disadvantages of prior art

Use of stray light covers to remove stray light has a significant inconvenient in case of ADAS cameras with wide field of view. Throughout this invention, the term wide field of view refers to an angle of 60°-130° inclusively, measured in a horizontal plane, as shown in Fig. 3a) and Fig. 3b) . Such cameras with wide field of view are more demanded because they offer a better driving assistance, more information about the road context being provided to ADAS (e.g. a person may not be not detected by the camera if the field of view of the camera is less than 60° but may be detected if the field of view of the camera is comprised in the interval 60°-130° inclusively.

The inconvenient is that for an ADAS camera with the afore-mentioned wide field of view, the stray light cover becomes so large that it obstructs a large portion of driver's field of view. Fig. 3a) shows a schematic view of the field of view for which the stray light cover still has reasonable dimensions, namely around 50°. Fig. 3b) shows a non-limiting example of wide field of view, of around 90°, comprised in the interval 60°-130°.

Use of polarization filters in the state of art to remove stray light has the disadvantage of attenuating incoming light and therefore reducing the performance of the images acquired by the ADAS camera particularly in low light conditions, such as when it's raining or very cloudy, at dusk or at night.

Problem solved by the invention

The problem to be solved by the invention is how to remove window reflections on the images acquired by an ADAS camera, particularly in case ADAS camera has a wide field of view, without obstructing driver's field of view and without reducing the performance of acquiring images of said ADAS camera in low light conditions.

Summary of the invention

In order to solve the problem, the inventors conceived a method of removing stray light from a vehicle window in a camera arrangement comprising an exterior-facing camera configured to provide images to an advanced driving assistance system ADAS processing chain, said camera with a field of view of less than or equal to 130° measured in horizontal plane, being mounted in the interior of the vehicle and facing said window, using a polarization filter placed in the optical path of the camera *wherein* said polarization filter is electronically switchable allowing changing its state from ON to OFF and from OFF to ON, being operated by means of a micro-controller and *wherein* the following repetitive sequence of steps is carried out:

Step 1 Switching the polarization filter ON and acquiring a reference image by an image acquisition software component of said camera with the polarization filter switched ON and temporary storing said reference image in at least one memory component;

Step 2 Switching the polarization filter OFF and acquiring at least one subsequent image by the image acquisition software component with the polarization filter switched OFF and temporary storing said reference image in the at least one memory component;

Step 3 Comparing by means of an image processing software component of the camera:

- the intensity of each pixel of the reference image with
- the intensity of each pixel of at least one subsequent image acquired by the image acquisition software component of said camera with the polarization filter switched OFF;

Step 4 Identifying stray light to be removed by means of the image processing software component by detecting at least one area of the image having different intensity of the pixels between the reference image and the at least one subsequent image;

Step 5 Removing identified stray light by means of the image processing component from the at least one subsequent image, resulting a corresponding at least one corrected image;

Step 6 Temporary storing the at least one corrected image in the at least one memory component wherefrom said corrected image can be used by the advanced driving assistance system ADAS processing chain.

In another aspect of the invention, it is provided a camera arrangement mounted in the interior of a vehicle and facing at least one window of the vehicle, adapted to execute the steps of the method, comprising:

- a camera lens barrel including at least one lens;
- a camera image sensor configured to take images of the exterior of the vehicle and further configured to detect luminous intensity of outdoor light;
- a polarization filter placed in the optical path to the camera imager sensor provided with an electronic switch allowing changing state of the polarization filter from ON to OFF and from OFF to ON;
- a micro-controller, configured to operate the electronic switch, based on the data received from the camera image sensor and on the data received from an image processing software component.
- an image acquisition software component, configured to use images from the camera image sensor, further configured to set camera image sensor parameters such as: picture exposure time, region of interest, acquisition period, and further configured to send acquired images to at least one memory component in order to be used by a processing software component;
- the image processing software component, configured to receive images from the acquisition component by means of the at least one memory , configured to compare said reference images with said subsequent images and further configured to correct said subsequent images by removing stray light by means of image processing techniques and further configured to send said corrected images to the at least one memory and further configured to send a signal to the micro-controller if the number of pixels showing difference of content between the reference image and the at least one subsequent image is above the pre-determined value expressed as a percentage of total pixels of the at least one area of the image;
- at least one memory configured to temporary store images acquired by the image acquisition software component and to temporary store the corrected images provided by the image processing software component; further configured to store parameters such as pre-determined luminous intensity threshold, a pre-determined percentage of pixels showing difference of intensity between reference images and subsequent images; further configured to store the coordinates of at least area of the image and of the at least one affected area and further adapted to be connected with the micro-controller, the latter being further configured to provide the corrected images stored in the at least one memory to an advanced driving assistance system ADAS processing chain.

In another aspect of the invention, it is provided a computer program comprising instructions to cause the camera arrangement to execute the steps 1 to 3 of the method.

In another aspect of the invention, it is provided a computer program comprising instructions to cause the camera arrangement to execute the steps 4 to 6 of the method.

Advantages of the invention

The main advantages of this invention are the following:

i) Method and camera arrangement according to the invention improve the quality of the images acquired by ADAS camera with field of view less than or equal to 130° by removing efficiently a significant amount of window reflections. Although method and camera arrangement according to the invention may be used for any angle of the field of view that is less than or equal to 130°, it is particularly advantageous to use them for ADAS cameras having a wide field of view, typically ranging in the interval 60°-130°.

ii) Method and camera arrangement according to the invention make use of current apparatus and electronic components existing on the vehicle, including: ADAS camera, electronically switchable polarization filter, micro-controller, memory or memories etc.;

iii) Method and camera arrangement according to the invention are suitable for use in the context of automated driving;

iv) Method and camera arrangement according to the invention do not obstruct driver's field of view;

v) Method and camera arrangement according to the invention are adaptable to any light conditions, making efficient use of the computing resources of the camera arrangement and allowing ADAS camera to acquire pictures not affected by the attenuation effect of the polarization filter when light conditions are low;

vi) Method and camera arrangement according to some embodiments of the invention allow making more efficient use of the computing resources of the components of the camera arrangement by defining affected areas of the image on which the method is applied, instead of applying on the entire image area;

vii) Method and camera arrangement according to some embodiments of the invention allow training of the camera arrangement to recognize the situations in which switching ON the polarization filter is really necessary, making efficient use of the computing resources of the camera arrangement.

Brief description of the drawings

Fig.1): Presentation of stray light:

Fig. 1a) : Example of stray light on the windscreen of a vehicle;
Fig. 1b) : Schematic view of the incidental I and reflected light
R on the windscreen W originating from the dashboard D;

Fig 2): Prior art:

Fig. 2a): Example of stray light cover for the ADAS camera mounted in the vicinity of the interior mirror facing the windscreen;
Fig 2b): Arrangement of the camera facing the windscreen;

Fig 3: Schematic view of the field of view (FoV) of the ADAS camera according to the invention as compared with prior art;

Fig 3a) Schematic view of the field of view (FoV) of the ADAS camera using the stray light cover -50° FoV, as compared with a typical wide field of view (FoV) of the ADAS camera, 60°-130°;
Fig. 3b) Schematic view of the field of view (FoV) of the ADAS camera using the method and the camera arrangement according to the invention highlighting the efficiency of the correction carried out by the polarization filter.

Fig. 4a): Camera arrangement according to the invention;
Fig. 4b): Example of placing of the polarization filter
Fig. 5a): Images acquired by the ADAS camera with polarization filter ON
Fig. 5b) Images acquired by the ADAS with polarization filter OFF;
Fig 6): Schematic diagrams of the method, according to the invention;

Fig 6a): Diagram of the method, according to the invention;
Fig 6b) Schematic diagram of the images from various steps of the method, according to the invention.

Fig. 7): Schematic view of the horizontal field of view of the ADAS camera (FoV) according to the invention:

Fig. 7a): Image with the polarization filter ON;
Fig 7b): Image with the polarization filter OFF;

Fig 8) : Camera arrangement system according to the invention, as seen from the side in a preferred embodiment, when the window is the windscreen and the camera is placed near the interior mirror;
Fig. 9): Camera arrangement system according to the invention, as seen from the front, in the same preferred embodiment;
Fig. 10) : Example of defining affected area, according to another preferred embodiment;
Fig 11): Schematic view of identifying and correcting images according to the preferred embodiment of Fig 10);

Fig 11a) : Schematic view of identifying stray light on affected areas;
Fig 11b): Schematic view of the corrected image.

List of references in the drawings:

| 1 | Camera arrangement |
|---|---|
| 2 | ADAS Processing Chain |
| 10 | Exterior-facing Camera |
| 100 | Camera Lens Barrel |
| 101 | Camera Image Sensor |
| 102 | Polarization Filter |
| 102-2 | Electronic switch |
| 103 | Microcontroller |
| 104 | Image acquisition software component |
| 105 | Image processing software component |
| 106 | At least one memory component |
| D | Dashboard |
| G | Ground Plane |
| I | Incident light |
| R | Reflected light |
| W | Window/Windscreen |

Detailed description

The method according to the invention can be used in connection with any type of ADAS camera that have a field of view of less than or equal to 130°.

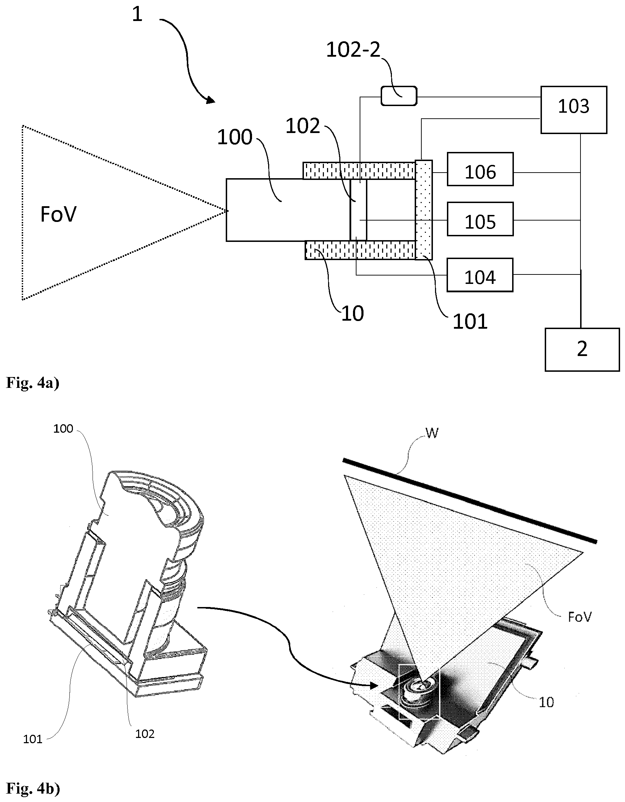

With reference to Fig. 4a), the method is carried out in a camera arrangement 1 according to the invention, comprising an exterior-facing camera 10 being mounted in the interior of the vehicle, facing any window W of the vehicle, configured to provide images to an advanced driving system ADAS processing chain 2. Said ADAS processing chain 2 may include, for example, functions of support of the image detection, functions of detection of the persons and objects from the road context, modelling functions for the road context, functions related to the safety such as braking and so on.

With reference to Fig. 4a), the ADAS camera 10 comprises a lens barrel 100 where at least one lens is placed and a camera image sensor 101 which is configured to take images of the exterior of the vehicle and is further adapted to detect luminous intensity of outdoor light. Throughout this invention, the terms low light and high light are used in their common sense.

The camera image sensor 101 is controlled by an image acquisition software component 104 that has double role. The first role is to set the parameters for the functioning of the camera image sensor 101, such as but not limited to: picture exposure time, region of interest, that is from what zones of the exterior of the vehicle should images be taken, what is the acquisition period of the pictures, etc. The second role of the image acquisition software component 104 is to acquire images from the camera image sensor 101.

Further on, the camera 10 is provided with an electronically switchable polarization filter 102, in short polarization filter 102, placed in the optical path of the camera image sensor 101. The polarization filter 102 is controlled electronically by a micro - controller 103 by means of a switch 102-2 allowing two states: Filter ON and Filter OFF. An example of placing the polarization filter 102 is illustrated in Fig. 4b) and shall not be considered as limiting.

The ADAS camera 10 is further provided with an image processing software component 105 having the role to carry out the processing of the images: uses images from the image acquisition software component 104, compare images, remove stray light, send corrected images. Apart from that, the image processing software component 105 provides the conditions for operating ON and, respectively OFF the switch 102-2 of the polarization filter 102.

Both image acquisition software component 104 and image processing software component 105 use at least one memory component 106. All images acquired by the image acquisition software component 104 are temporary stored in the at least one memory 106, wherefrom they are used by the image processing software component 105 for the purpose of carrying out the subsequent steps of the method. All images processed by the image processing software component 105 are then stored in the at least one memory 106, wherefrom they can be used by the ADAS processing chain 2.

According to the invention, the method consists of repetitive sequences of six steps.

In the first step of the method, the polarization filter 102 is switched ON and a reference image is acquired by the image acquisition software component 104 from the camera image sensor 101 and temporary stored in the at least one memory 106.

In the second step, the polarization filter 102 is switched OFF and at least one subsequent image is acquired by the image acquisition software component 104 from the camera image sensor 101 and temporary stored in the at least one memory 106.

The reference image and the at least one subsequent image are referred to hereafter as a pair of images.

In the third step, a comparison is made by means of the image processing software component 105 between the content of the images of each pair.

Comparison of the pair of images is made using a matrix that contains the coordinates of the pixels, thus each pixel from the reference image is compared with the pixel having the same coordinates in the at least one subsequent image.

It is compared the intensity of each pixel of the reference image with the intensity of each pixel of the at least one subsequent image.

In case of a plurality of subsequent images acquired with the polarization filter 102 switched OFF for a single reference image acquired with the polarization filter 102 switched ON, there will be as many pairs of images as the number of subsequent images.

In the fourth step, stray light to be removed is identified by detecting at least one area of the image having different intensity between the reference image with the polarization filter 102 switched ON and any of the at least one subsequent image with the polarization filter 102 switched OFF.

Content comparison carried out in step 3 identifies stray light by detecting if there are significant changes of the content in the images of the pair, particularly in case of a plurality of subsequent images acquired with the polarization filter 102 switched OFF for a single reference image acquired with the polarization filter 102 switched ON.

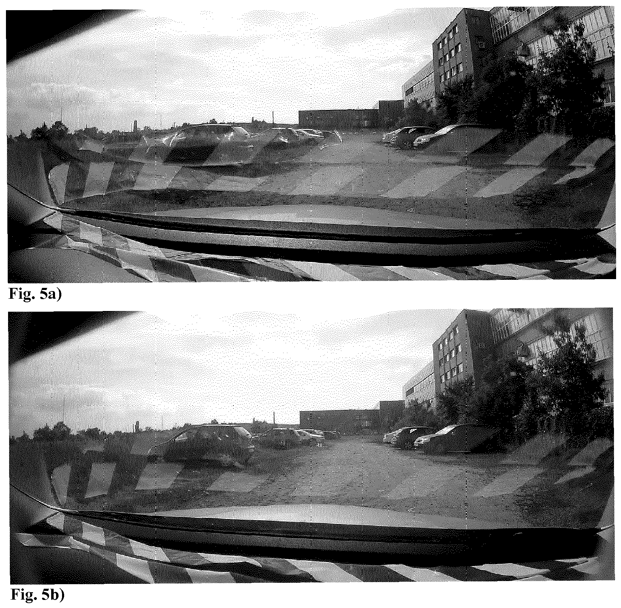

To illustrate the difference, Fig 5a) shows an image acquired with polarization filter 102 switched ON whereas Fig. 5b) shows the same image with the polarization filter 102 switched OFF. A ribbon was placed on the dashboard D of the vehicle to make more evident the effect of the stray light.

Once identified, stray light is removed in the fifth step by means of the image processing software component 105, resulting for each of the subsequent images a corresponding corrected image.

In case there is no pixel showing different pixel intensity between the reference image and at least one subsequent image, the correction is zero and the corrected image is identical with the corresponding subsequent image.

Each corrected image is temporary stored in the sixth step of the method in the at least one memory component 106 wherefrom it can be used by the ADAS processing chain 2.

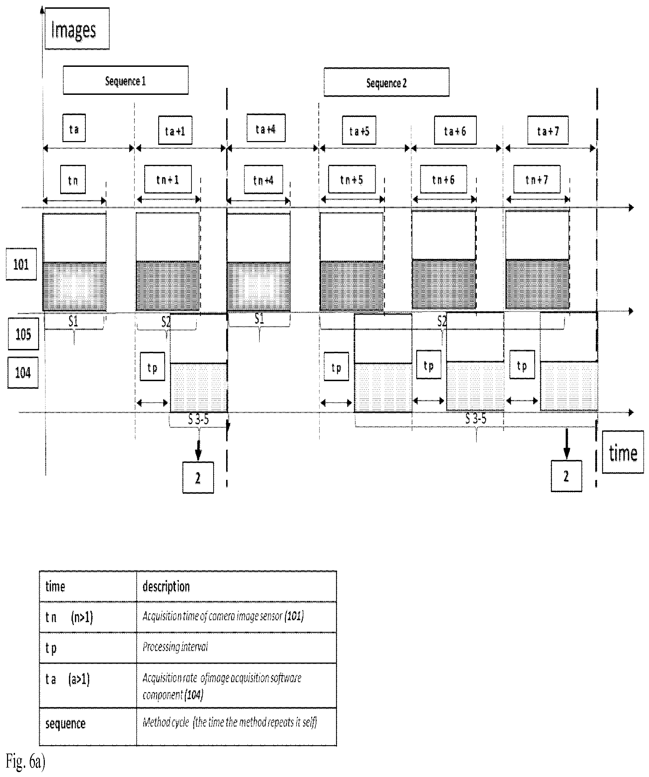

With reference to the diagram of Fig 6a), the image acquisition software component 104 acquires images from the camera sensor 101 at an acquisition rate $t_a$ of the image acquisition software component 104, where a > 1. The camera image sensor 101, has its own acquisition time, referred to as acquisition time of camera image sensor $t_n$, where n > 1. The acquisition of images is made in a sequential manner, such as for example using rolling shutter method or similar. The acquisition rate must be larger than the acquisition time:

$t_a > t_n$

Again, with reference to the diagram of Fig 6a), the comparison, identification and removal as described respectively in steps 3 to 5 of the method are carried out in the same sequential manner in respect to the acquired image. The time allocated to the ensemble of these steps is called processing interval $t_p$ and is defined as the delay of sending each of the corrected images to the ADAS processing chain 2

$t_a$, $t_n$, $t_p$ are expressed in milliseconds (ms) and are constant values for each camera arrangement 1. For example, the camera sensor 101 can acquire images each 20ms, thus $t_n$ = 20ms; image acquisition software component 104 can acquire images each 30ms, thus $t_a$ = 30ms, and the processing interval $t_p$ can be up to 9ms. This example shall not be considered as limiting, it is used exclusively to ease the understanding of the invention.

One sequence of the method would last at least the duration of two acquisition rates $t_a$ of the image acquisition software component 104, corresponding to one reference image with the polarization filter 102 switched ON and one subsequent image with the polarization filter switched OFF.

One sequence of the method may include the acquisition of a plurality of subsequent images with the polarization filter 102 switched OFF for a single reference image acquired with the polarization filter switched ON. This is illustrated in sequence 2 of Fig. 6a) as three subsequent images acquired with the polarization filter 102 switched OFF. It shall be understood that the number of three subsequent images of Fig. 6a) is for the sake of simplicity of the drawing only and shall not be considered as limiting the scope of the invention.

For simplicity reason, the at least one memory 106 is not represented graphically in the diagram of Fig 6a).

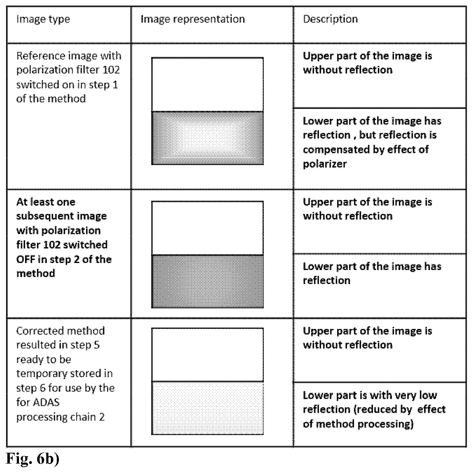

Fig. 6b) illustrates schematically the difference between the images, as they are presented in Fig. 6a), where one area of the image has been considered for exemplification, in this case the lower half of the image:

- The upper image shows the image acquired in step 1 with the polarization filter 102 switched ON. The reflection is partially compensated by the attenuation effect of the polarization filter 102;
- The middle image shows the image acquired in step 2 with the polarization filter 102 switched OFF. Stray light affects the lower half of the image;
- The lower image shows the corrected image as resulted in step 5 of the method.

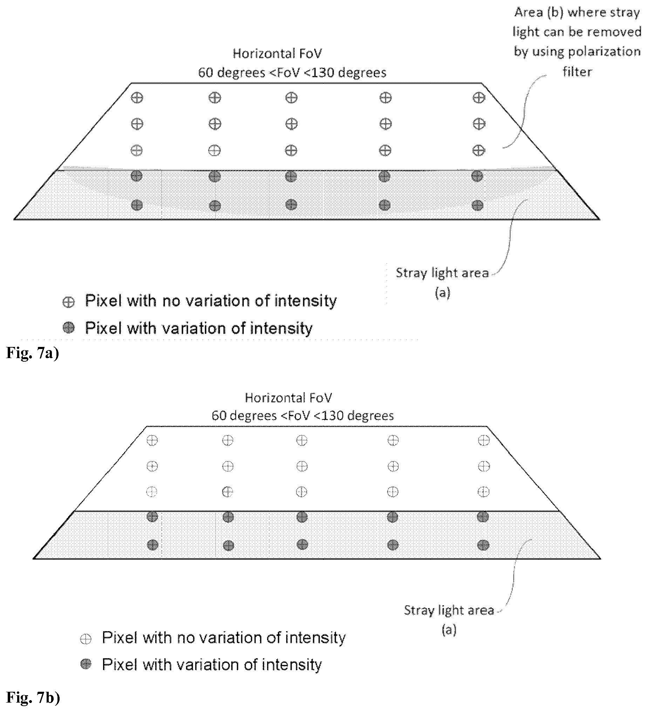

Fig. 7a) and Fig. 7b) illustrate schematically the horizontal field of view of the ADAS camera 10 where stray light is present in one area of the image, called area (a).

Fig 7a) corresponds to the subsequent image taken with the polarization filter 102 switched ON, whereas Fig 7b) illustrates schematically the same horizontal field of view as in Fig. 7a) but when the polarization filter is switched OFF.

In both Fig 7a) and 7b), the pixels with different pixel intensity are represented graphically in a different way than the pixels that have the same intensity.

For an easy understanding of the teaching of the invention, in Fig. 6b), Fig. 7a) and Fig. 7b) the respective illustrated areas are considered to be uniformly affected by stray light and located in a single are of the image. However, it will be understood that in real-life situation, usually stray light does not uniformly affect the area or the areas of the image. It will be equally understood that stray light may affect more than one area of the image.

Schematically, the difference between the at least one subsequent image the reference image represents the stray light:

$$\mathrm{IMAG}_{\text{without filter}} - \mathrm{IMAG}_{\text{with filter}} = \text{Stray light.}$$

Schematically, the relationship of the stray light removed with the stray light identified is as follows, which corresponds to the images illustrated in Fig. 6b):

Stray light $_{removed}$ < Stray light

The method according to the invention is capable of removing the maximum of the stray light of the center of the image. The proportion of removal of stray light decreases towards the margins of the window W, due to the warping of the images as the surface of the polarization filter 102 is plane whereas the surface of the lens or lenses is curved.

This is represented graphically by area (b) in Fig. 7a), where it can be seen that area (b) corresponding to stray light removed is smaller than area (a) of stray light identified.

The camera 10 is configured to provide images to the ADAS processing chain 2 in all light conditions, with or without applying the method of the invention. Usually in low light conditions, such as for example in when it's raining or very cloudy, at dusk or at night, it is not necessary to apply the invention, thus the polarization filter 102 remains switched OFF but the camera 10 keeps on acquiring pictures and sending same to the ADAS processing chain 2 outside the scope of this invention.

In order to operate the switch ON for initiating the application of the method, at least one condition from the two presented below must be fulfilled:

- either when the luminous intensity of the outdoor light, received from the camera image sensor 101, is above a pre-determined luminous intensity threshold;
- or when the number of pixels showing difference of content between the reference image and the at least one subsequent image is above a pre-determined value expressed as a percentage of total pixels of the at least one area of the image.

The rationale of automatically switching ON of the polarization filter 102 if luminous intensity is above said corresponding pre-determined threshold is the capability of the method to remove reflections of the window W from the images acquired by the ADAS camera 10 without impairing the quality of said images that are due to the natural attenuation of the light produced by the polarization filter.

This attenuation is not disturbing in high light condition for the mere reason that the intensity of the light is high. Attenuation of light is generally disturbing in low light conditions.

The rationale of the alternative condition of automatically switching ON of the filter 102 - specifically if the number of pixels showing difference of content between the reference image and the at least one subsequent image is above a pre-determined value, is that the quantity of straylight increases with the number of pixels showing difference of intensity, thus setting said pre-determined value is needed to separate the case when straylight is low enough not to impair the quality of the images, from the cases when straylight is sufficiently high to impair the quality of the images.

In most of the cases, both conditions are fulfilled, as usually the more intense the outdoor light, the more probable the straylight will be present. However, there may be cases where for example the presence of many light-colour objects in the vehicle may lead to disturbing stray light even if the luminous intensity of the outdoor light is below said luminous intensity threshold.

The pixels showing difference of intensity between the images of the pair above said threshold are concentrated in one area of the image or in several areas of the image. The area or areas depends, respectively depend on the geometry of the window and on the conditions that generate stray light. In one example the pre-determined value may be 30% of the pixels affecting a single area of the image, said area being placed in the lower half of the image, whereas in other example there may be another pre-determined value of 45% of the pixels affecting the entire image, thus in the latter case the area of the image may be the entire image. Once again, the examples are for illustration only and shall not be limiting the scope of the method according to the invention.

The higher luminous intensity of outdoor light, the shorter the sequence of the method, that is less subsequent images acquired with the polarization filter 102 switched OFF are required for a single reference image acquired with the polarization filter 102 switched ON. The shortest sequence has one subsequent image acquired with the polarization filter 102 switched OFF for one image acquired with the polarization filter 102 switched ON, as represented in the first sequence of Fig. 6a), being the case that makes most use of the polarization filter 102.

On the contrary, the lower the luminous intensity of outdoor light, but above the pre-determined threshold, the longer the sequence, that is more subsequent images acquired with the polarization filter 102 switched OFF are required for a single reference image acquired with the polarization filter 102 switched ON.

The polarization filter 102 remains switched OFF as long as the number of pixels showing difference of content between the reference image and the at least one subsequent image does not exceed the pre-determined value expressed as a percentage of total pixels of the at least one area of the image.

The assessment whether the differences of content are above or below the respective pre-determined values and thus whether there are conditions to switch ON again the polarization filter 102 in order to start a new sequence is carried out by the image processing software component 105 in the third step of the method being included in the comparison.

Pixel luminous intensity differs mostly in one or several areas of the image and the localization of the pixels with different luminous intensity has a pattern substantially repeated from one pair of images to the subsequent pair of images .

By determining the length of the sequence, it is ensured that the polarization filter 102 is switched ON often enough to avoid that changes in the image content such as for example an obstacle be interpreted as stray light.

In a preferred embodiment of the invention, the camera 10 is configured to face the windscreen W, acquiring forward-facing images.

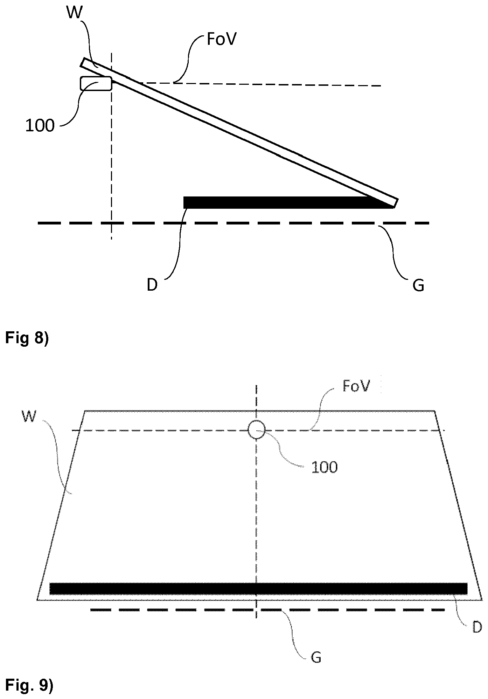

This embodiment is illustrated in Fig. 8), where camera arrangement 1 is seen from the side and Fig 9), where the camera arrangement 1 is seen in a front view. In this case, the camera 10 is placed near the interior mirror. The field of view FoV is always above the ground plane G.

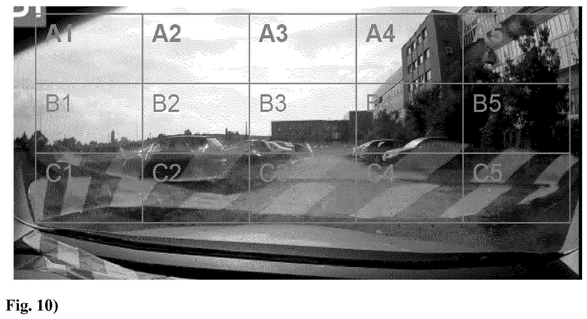

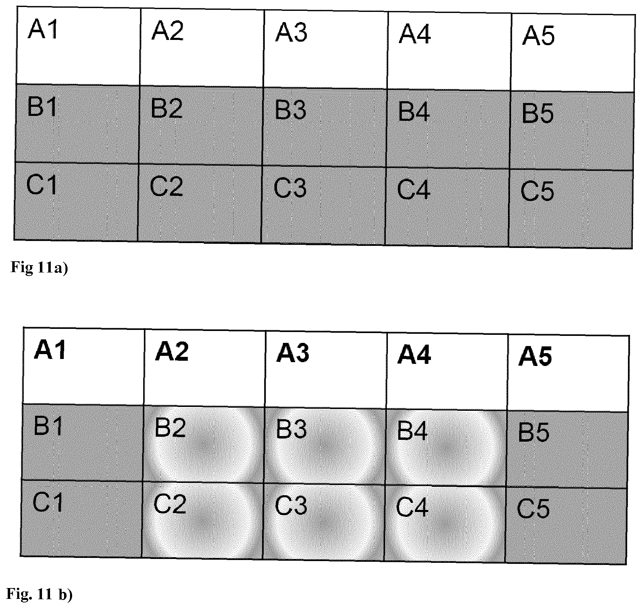

According to another preferred embodiment of the invention, illustrated in Fig. 10) and Fig. 11) the steps 3, 4 and 5 of the method are carried out only for one or several areas of the image that is, respectively are, most susceptible of being affected by stray light, called affected area, respectively affected areas, defined by the geometry of the window W and its inclination. It shall be understood that, although Fig. 10) and Fig. 11) illustrate the case when affected areas are defined for the windscreen W, affected areas may concern any window W of the vehicle.

The rationale to define one affected area or several affected areas is based on the experience that, for a given window W, stray light usually affects more a certain part of the image or certain parts of the image, whereas stray light affecting the remainder of the image is negligible.

By defining at least one affected area, the steps 3, 4 and 5 of the method are carried out only for said at least one affected area in this preferred embodiment and not for the entire image, as it is carried out according to the invention.

The at least one area of the image according to the invention may be the entire image itself, whereas the at least one affected area is smaller than the entire image.

The positioning of the at least one area of the image according to the invention within the image is random, depending on the sources of stray light. For example, in a group of consecutive sequences the passenger sitting next to the driver puts on the dashboard D in the right corner a white sun cap, whereas in other group of consecutive sequences that passenger left, but the driver places some white papers on the dashboard D just in the middle of the image. In this example, in the first case there is at least one area of the image affected by stray light in the lower right corner of the image, whereas in the second case there is at least one area of the image affected by stray light in the middle of the image.

The positioning of the at least one affected area of the image according to this preferred embodiment is always the same, as it is pre-defined.

Fig. 10) shows, for easy understanding of the teaching of the invention, division of the windscreen W in three horizontal zones: the upper third, corresponding to row A, being considered as area not affected by stray light and the two lower thirds of the window W, corresponding to rows B and C being the area affected by stray light. The division of the windscreen W area in three areas is for illustration only and shall not be limiting. Each window W may have other proportion of the affected area or areas, depending primarily on its geometry and inclination.

Fig. 11a) illustrates schematically the image acquired by the camera 10 through the windscreen W with the polarization filter 102 switched OFF. In the figure it can be seen that reflection is usually present in areas marked by B and C. For a better understanding of the teaching of the invention, Fig. 11a) shows areas B and C as if they were affected each one uniformly by stray light, in reality stray light may affect the areas in a non-uniform way. It may be considered, for example, that more stray light usually affects row C than row B.

Comparison of images in step 3, identification of stray to be removed in step 4 and removing of stray light in step 5 are carried out only for the areas B and C.

Fig. 11b) illustrates schematically the corrected image that results in step 5, where stray light is removed from areas B2, B3, B4, C2, C3, C4. As mentioned above, the maximum quantity of stray light is removed from the centre of the image, in this case B3 and C3, and is reduced progressively towards the margins of the window W. Stray light is not removed from areas B1, C1, B5 and C5, however the exact dimensions of areas B1,C1, B5 and C5 depend on the lens or lenses of the camera 10 as well as on the geometry of the window W.

Given the complexity of the real-life situation in which the method is carried out, an optimization of the operation of the polarization filter 102 may be desirable. Thus, in another preferred embodiment, the method is performed by training of an artificial neural network NN of the controller 103 to switch ON the polarization filter 102 based on a set of constraints of said artificial neural network NN relating to the changes in luminous intensity of the outdoor light, changes of the number of pixels showing difference of content of image expressed as a percentage of total pixels of the at least one area of the image and defining of said at least one affected area.

The training may be carried out either off-line, or both off-line and online, in the latter case off-line training taking place before online training.

Off-line training refers to sub-steps aiming to train the neural network NN of the controller 103 before said controller 103 is ready to be operated, as this type of training is usually based on the results of tests carried out before said 103 is integrated into the camera arrangement 1.

On-line training refers to sub-steps aiming to further train or fine-tune the neural network NN of the controller 103 during the application of the method by the camera arrangement 1, as this type of training is based on actual and real-time data of applying said method.

The camera arrangement 1 mounted in the interior of a vehicle and facing at least one window W of the vehicle is adapted to execute the steps of the method. Said camera arrangement 1 comprises the following:

- a camera lens barrel 100 including at least one lens;
- a camera image sensor 101 configured to take images of the exterior of the vehicle and further configured to detect luminous intensity of outdoor light;
- a polarization filter 102 placed in the optical path to the camera imager sensor 101 provided with an electronic switch 102-2 allowing changing state of the polarization filter 102 from ON to OFF and from OFF to ON;
- a micro-controller 103, configured to operate the electronic switch 102-2, based on the data received from the camera image sensor 101 and on the data received from an image processing software component 105;
- an image acquisition software component 104, configured to acquire images from the camera image sensor 101, further configured to set camera image sensor 101 parameters such as: picture exposure time, region of interest, acquisition period, and further configured to send acquired images to at least one memory component 106 in order to be used by a processing software component 105;
- the image processing software component 105, configured to use images from the acquisition component 104 by means of the at least one memory 106, configured to compare said reference images with said subsequent images and further configured to correct said subsequent images by removing stray light by means of image processing techniques and further configured to send said corrected images to the at least one memory 106 and further configured to send a signal to the micro-controller 103 if the number of pixels showing difference of content between the reference image and the at least one subsequent image is above the pre-determined value expressed as a percentage of total pixels of the at least one area of the image.
- at least one memory 106 configured to temporary store images acquired by the image acquisition software component 104 and to temporary store the corrected images provided by the image processing software component 105; further configured to store parameters such as pre-determined luminous intensity threshold, pre-determined percentage of pixels showing difference of intensity between reference images and subsequent images; further configured to store the coordinates of at least area of the image and of the at least one affected area and further adapted to be connected with the micro-controller 103 the latter being further configured to provide the corrected images stored in the at least one memory 106 to an advanced driving assistance system ADAS processing chain 2.

If optimization of the operation of the polarization filter 102 is sought, the micro-controller 103 may further comprise an artificial neural network NN configured to be trained to switch ON the polarization filter 102 based on a set of constraints of said artificial neural network NN relating to the changes in luminous intensity of the outdoor light, changes of the number of pixels showing difference of content of image expressed as a percentage of total pixels of the at least one area of the image and defining of said at least one affected area.

The image acquisition software component 104 may run either on the micro-controller 103 or it may run on a remote server, communicating with the other components of the camera arrangement 1 within a mobile communication system.

Likewise, the image processing software component 105, it may run either on the micro-controller 103 or it may run on a remote server, communicating with the other components of the camera arrangement 1 within a mobile communication system.

The advanced driving assistance system ADAS processing chain 2 may run either on the micro-controller 103 or on a remote server, communicating with the other components of the camera arrangement 1 within a mobile communication system.

The method and the camera arrangement system according to the invention allow for any combination of localization of the components that may be placed in more than one site, such as but not limited to: the image acquisition software component 104 may run on the micro-controller 103, ADAS processing chain 2 may run on the micro-controller 103, whereas the image processing software component 105 may run on the remote server. When said components run on the remote server, said server may not necessarily be the same.

In order to apply the method of the invention, two computer programs are further provided: one computer program for the image acquisition software component 104 and another computer program for the image processing software component 105.

The computer program provided for the image acquisition software component 104 comprises instructions to cause the camera arrangement 1 to execute the steps 1 to 3 of the method, whereas the computer program provided for the image processing software component 105 comprises instructions to cause the camera arrangement 1 to execute the steps the steps 4 to 6 of the method.

While the description of the method and the camera arrangement system was disclosed in detail in connection to preferred embodiments, those skilled in the art will appreciate that changes may be made to adapt a particular situation without departing from the essential scope to the teaching of the invention.

**Claims**

1. Method of removing stray light from a vehicle window (W) in a camera arrangement (1) comprising an exterior-facing camera (10) configured to provide images to an advanced driving assistance system ADAS processing chain (2), said camera (10) with a field of view of less than or equal to 130° measured in horizontal plane, being mounted in the interior of the vehicle and facing said window (W), using a polarization filter (102) placed in the optical path of the camera (10) wherein said polarization filter (102) is electronically switchable allowing changing its state from ON to OFF and from OFF to ON, being operated by means of a micro-controller (103) and wherein the following repetitive sequence of steps is carried out:

   Step 1 Switching the polarization filter (102) ON and acquiring a reference image by an image acquisition software component (104) of said camera (10) with the polarization filter (102) switched ON and temporary storing said reference image in at least one memory component (106);
   Step 2 Switching the polarization filter (102) OFF and acquiring at least one subsequent image by the image acquisition software component (104) with the polarization filter (102) switched OFF and temporary storing said reference image in the at least one memory component (106);
   Step 3 Comparing by means of an image processing software component (105) of the camera (10):

   - the intensity of each pixel of the reference image with
   - the intensity of each pixel of at least one subsequent image acquired by the image acquisition software component (104) of said camera (10) with the polarization filter (102) switched OFF;

   Step 4 Identifying stray light to be removed by means of the image processing software component (105) by detecting at least area of the image having different intensity of the pixels between the reference image and the at least one subsequent image;
   Step 5 Removing identified stray light by means of the image processing component (105) from the at least one subsequent image, resulting a corresponding at least one corrected image;
   Step 6 Temporary storing the at least one corrected image in the at least one memory component (106) wherefrom said corrected image can be used by the advanced driving assistance system ADAS processing chain (2).

2. Method according to claim 1, wherein polarization filter is automatically switched ON when the luminous intensity of the outdoor light, received from the camera image sensor (101), is above a pre-determined luminous intensity threshold or when the number of pixels showing difference of content between the reference image and the at least one subsequent image is above a pre-determined value expressed as a percentage of total pixels of the at least one area of the image.

3. Method according to claim 2, wherein within step 2 of the method, the polarization filter 102 remains switched OFF as long as the number of pixels showing difference of content between the reference image and the at least one subsequent image does not exceed the pre-determined value expressed as a percentage of total pixels of the at least one area of the image.

4. Method according to any of the preceding claims wherein the camera (10) is configured to face the windscreen (W) of the vehicle for acquiring forward-facing images.

5. Method according to any of the preceding claims, wherein the comparison, identification and removing steps are carried out only for said at least one area of the image, called affected area.

6. Method according to any preceding claim for optimizing the operation of the polarization filter 102, where the method is performed by training of an artificial neural network (NN) of the controller 103 to switch ON the polarization filter 102 based on a set of constraints of said artificial neural network (NN) relating to the changes in luminous intensity of the outdoor light, changes of the number of pixels showing difference of content of image expressed as a percentage of total pixels of the at least one area of the image and defining of said at least one affected area.

7. Camera arrangement (1) mounted in the interior of a vehicle and facing at least one window (W) of the vehicle, adapted to execute the steps of the method according to claims 1 to 6 comprising:

   • a camera lens barrel (100) including at least one lens;
   • a camera image sensor (101) configured to take images of the exterior of the vehicle and further configured to detect luminous intensity of outdoor light;
   • a polarization filter (102) placed in the optical path to the camera imager sensor (101) provided with an electronic switch (102-2) allowing changing state of the polarization filter (102) from ON to OFF and from OFF to ON;
   • a micro-controller (103), configured to operate the electronic switch (102-2), based on the data received from the camera image sensor (101) and on the data received from an image processing software component (105)
   • an image acquisition software component (104), configured to acquire images from the camera image sensor (101), further configured to set camera image sensor (101) parameters such as: picture exposure time, region of interest, acquisition period, and further configured to send acquired images to at least one memory component (106) in order to be used by a processing software component (105);
   • the image processing software component (105), configured to receive images from the acquisition component (104) by means of the at least one memory (106), configured to compare said reference images with said subsequent images and further configured to correct said subsequent images by removing stray light by means of image processing techniques and further configured to send said corrected images to the at least one memory (106) and further configured to send a signal to the micro-controller 103 if the number of pixels showing difference of content between the reference image and the at least one subsequent image is above the pre-determined value expressed as a percentage of total pixels of the at least one area of the image;
   • at least one memory (106) configured to temporary store images acquired by the image acquisition software component (104) and to temporary store the corrected images provided by the image processing software component (105) ; further configured to store parameters such as pre-determined luminous intensity threshold, pre-determined percentage of pixels showing difference of intensity between reference images and subsequent images; further configured to store the coordinates of at least area of the image and of the at least one affected area and further adapted to be connected with the micro-controller (103) the latter being further configured to provide the corrected images stored in the at least one memory (106) to an advanced driving assistance system ADAS processing chain (2).

8. Camera arrangement (1) according to claim 7, wherein said micro-controller (103) further comprises an artificial neural network (NN) configured to be trained according to the claim 6 of the method.

9. Camera arrangement (1) according to claim 7 or 8, wherein the image acquisition software component (104) may run on the micro-controller (103).

10. Camera arrangement (1) according to claim 7, or 8, wherein the image acquisition software component (104) may run on a remote server, communicating with the other components of the camera arrangement (1) within a mobile communication system.

11. Camera arrangement (1) according to claim 7, 8, 9, or 10, wherein the image processing software component (105) may run on the micro-controller (103).

12. Camera arrangement (1) according to any or the claims 7 to 10, wherein the image processing software component (105) may run on a remote server, communicating with the other components of the camera arrangement (1) within a mobile communication system.

13. Camera arrangement (1) according to any or the claims 7 to 12, wherein the advanced driving assistance system ADAS processing chain (2) may run on the micro-controller (103).

14. Camera arrangement (1) according to any or the claims 7 to 12, wherein the advanced driving assistance system ADAS processing chain (2) may run on a remote server, communicating with the other components of the camera arrangement (1) within a mobile communication system.

15. A computer program comprising instructions to cause the camera arrangement (1) of any of the claims 7 to 14 to execute the steps 1 to 3 of the method according to any of the claims 1 to 6.

16. A computer program comprising instructions to cause the camera arrangement (1) of any of the claims 7 to 14 to execute the steps 4 to 6 of the method according to any of the claims 1 to 6.

**Amended claims in accordance with Rule 137(2) EPC.**

1. Method of removing stray light from a vehicle window (W) in a camera arrangement (1) comprising an exterior-facing camera (10) configured to provide images to an advanced driving assistance system ADAS processing chain (2), said camera (10) with a field of view of less than or equal to 130° measured in horizontal plane, being mounted in the interior of the vehicle and facing said window (W), using a polarization filter (102) placed in the optical path of the camera (10) wherein said polarization filter (102) is electronically switchable allowing changing its state from ON to OFF and from OFF to ON, being operated by means of a micro-controller (103) and wherein the following repetitive sequence of steps is carried out:

   (Step 1) Automatically Switching ON the polarization filter (102) and acquiring a reference image by an image acquisition software component (104) of said camera (10) with the polarization filter (102) switched ON and temporary storing said reference image in at least one memory component (106);
   (Step 2) Automatically Switching OFF the polarization filter (102) and acquiring at least one subsequent image by the image acquisition software component (104) with the polarization filter (102) switched OFF and temporary storing said reference image in the at least one memory component (106) ;
   (Step 3) Comparing by means of an image processing software component (105) of the camera (10):

      - the intensity of each pixel of the reference image with
      - the intensity of each pixel of at least one subsequent image acquired by the image acquisition software component (104) of said camera (10) with the polarization filter (102) switched OFF;

   (Step 4) Identifying stray light to be removed by means of the image processing software component (105) by detecting at least an area of the image having the number of pixels showing difference of content between the reference image and the at least one subsequent image;
   (Step 5) Removing identified difference of content between the reference image and the at least one subsequent image by means of the image processing component (105) from the at least one subsequent image, resulting a corresponding at least one corrected image;
   (Step 6) Temporary storing the at least one corrected image in the at least one memory component (106) wherefrom said corrected image can be used by the advanced driving assistance system ADAS processing chain (2),

   wherein polarization filter is automatically switched ON

      • when the luminous intensity of the outdoor light, received from the camera image sensor (101), is above a pre-determined luminous intensity threshold or
      • when the number of pixels showing difference of content between the reference image and the at least one subsequent image is above a pre-determined value expressed as a percentage of total pixels of the at least one area of the image, and

wherein the polarization filter (102) remains switched OFF as long as the number of pixels showing difference of content between the reference image and the at least one subsequent image does not exceed the pre-determined value expressed as a percentage of total pixels of the at least one area of the image.

2. Method according to claim 1, wherein the comparison, identification and removing steps are carried out only for a specific said at least one area of the image, defined by the geometry of the window (W) and its inclination.

3. Camera arrangement (1) mounted in the interior of a vehicle and facing at least one window (W) of the vehicle, adapted to execute the steps of the method according to claims 1 or 2 comprising:

• a camera lens barrel (100) including at least one lens;
• a camera image sensor (101) configured to take images of the exterior of the vehicle and further configured to detect luminous intensity of outdoor light;
• a polarization filter (102) placed in the optical path to the camera imager sensor (101) provided with an electronic switch (102-2) allowing changing state of the polarization filter (102) from ON to OFF and from OFF to ON;
• an image acquisition software component (104), configured to acquire images from the camera image sensor (101), further configured to set camera image sensor (101) parameters such as: picture exposure time, region of interest, acquisition period, and further configured to send acquired images to at least one memory component (106) in order to be used by a processing software component (105);
• a micro-controller (103), configured to operate the electronic switch (102-2), based on the data received from the camera image sensor (101) and on the data received from an image processing software component (105);
• the image processing software component (105), configured to receive images from the acquisition component (104) by means of the at least one memory (106), configured to compare said reference images with said subsequent images and further configured to correct said subsequent images by removing stray light by means of image processing techniques and further configured to send said corrected images to the at least one memory (106) and further configured to send a signal to the micro-controller (103) if the number of pixels showing difference of content between the reference image and the at least one subsequent image is above the pre-determined value expressed as a percentage of total pixels of the at least one area of the image;
• at least one memory (106) configured to temporary store images acquired by the image acquisition software component (104) and to temporary store the corrected images provided by the image processing software component (105); further configured to store parameters such as pre-determined luminous intensity threshold, pre-determined percentage of pixels showing difference of intensity between reference images and subsequent images; further configured to store the coordinates of at least area of the image and of the at least one affected area and further adapted to be connected with the micro-controller (103) the latter being further configured to provide the corrected images stored in the at least one memory (106) to an advanced driving assistance system ADAS processing chain (2).

4. A computer program comprising instructions to cause the camera arrangement (1) of claim 3 to execute the steps 1 to 3 of the method according to claim 1.

5. A computer program comprising instructions to cause the camera arrangement (1) of claim 3 to execute the steps 4 to 6 of the method according to claim 1.

**Fig. 1a)**

**Fig. 1b)**

**Fig 2a)**

Fig 2b)

60-130
degrees FOV

50 degrees FOV

Fig 3a)

FoVH

60-130
degrees
FoV

Fig 3b)

1

102-2

103

100    102

106

FoV

105

104

10

101

2

**Fig. 4a)**

100

W

102

FoV

101    102

10

**Fig. 4b)**

Fig. 5a)

Fig. 5b)

| time | description |
|------|-------------|
| t n   (n>1) | Acquisition time of camera image sensor (101) |
| t p | Processing interval |
| t a   (a>1) | Acquisition rate of image acquisition software component (104) |
| sequence | Method cycle (the time the method repeats it self) |

Fig. 6a)

| Image type | Image representation | Description |
|---|---|---|
| Reference image with polarization filter 102 switched on in step 1 of the method | | **Upper part of the image is without reflection** |
| | | **Lower part of the image has reflection , but reflection is compensated by effect of polarizer** |
| **At least one subsequent image with polarization filter 102 switched OFF in step 2 of the method** | | **Upper part of the image is without reflection** |
| | | **Lower part of the image has reflection** |
| Corrected method resulted in step 5 ready to be temporary stored in step 6 for use by the for ADAS processing chain 2 | | **Upper part of the image is without reflection** |
| | | **Lower part is with very low reflection (reduced by effect of method processing)** |

**Fig. 6b)**

Area (b) where stray
light can be removed
by using polarization
filter

Horizontal FoV
60 degrees <FoV <130 degrees

Stray light area
(a)

⊕ Pixel with no variation of intensity
● Pixel with variation of intensity

**Fig. 7a)**

Horizontal FoV
60 degrees <FoV <130 degrees

Stray light area
(a)

⊕ Pixel with no variation of intensity
● Pixel with variation of intensity

**Fig. 7b)**

**Fig 8)**

**Fig. 9)**

Fig. 10)

| A1 | A2 | A3 | A4 | A5 |
|----|----|----|----|----|
| B1 | B2 | B3 | B4 | B5 |
| C1 | C2 | C3 | C4 | C5 |

Fig 11a)

| A1 | A2 | A3 | A4 | A5 |
|----|----|----|----|----|
| B1 | B2 | B3 | B4 | B5 |
| C1 | C2 | C3 | C4 | C5 |

Fig. 11 b)

Europäisches
Patentamt

European
Patent Office

Office européen
des brevets

# EUROPEAN SEARCH REPORT

Application Number

EP 19 46 5509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/136344 A1 (BOSCH GMBH ROBERT [DE]; HISSMANN MICHAEL [DE]) 2 December 2010 (2010-12-02) | 1-16 | INV. G06K9/00 G06K9/20 |
| Y | * the whole document * | 1-16 | |
| A | EP 1 259 062 A2 (HEWLETT PACKARD CO [US]) 20 November 2002 (2002-11-20) * abstract * | 1-16 | |
| Y | EP 1 819 167 A2 (DELPHI TECH INC [US]) 15 August 2007 (2007-08-15) * paragraph [0005]; figures 1-3 * | 1-16 | |

TECHNICAL FIELDS
SEARCHED      (IPC)

G06K

The present search report has been drawn up for all claims

| Place of search | Date of completion of the search | Examiner |
|---|---|---|
| The Hague | 3 September 2019 | Neubüser, Bernhard |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 19 46 5509

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2019

| Patent document cited in search report | | | Publication date | Patent family member(s) | | | Publication date |
|---|---|---|---|---|---|---|---|
| WO 2010136344 | A1 | | 02-12-2010 | CN | 102450023 | A | 09-05-2012 |
| | | | | DE | 102009026463 | A1 | 09-12-2010 |
| | | | | EP | 2436190 | A1 | 04-04-2012 |
| | | | | WO | 2010136344 | A1 | 02-12-2010 |
| EP 1259062 | A2 | | 20-11-2002 | EP | 1259062 | A2 | 20-11-2002 |
| | | | | GB | 2375676 | A | 20-11-2002 |
| | | | | US | 2002172432 | A1 | 21-11-2002 |
| EP 1819167 | A2 | | 15-08-2007 | EP | 1819167 | A2 | 15-08-2007 |
| | | | | US | 2007182816 | A1 | 09-08-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170227791 A

- DE 102017202155